# EUROPEAN PATENT APPLICATION

(11) **EP 3 062 033 A1**
(43) Date of publication of application: **31.08.2016**
(21) Application number: 16156522.1
(22) Date of filing: 19.02.2016
(51) Int. Cl.: F24F 13/28, B01D 46/10, F24F 3/16

(54) **FILTER SUPPORT FOR INDOOR UNIT, INDOOR UNIT, AND AIR CONDITIONER**

(30) Priority: 24.02.2015 JP 2015034092
(71) Applicant: Mitsubishi Heavy Industries, Ltd., Tokyo 108-8215 (JP)
(72) Inventor: Kanamori, Azusa, Tokyo, 108-8215 (JP); Okada, Yuji, Tokyo, 108-8215 (JP)
(74) Representative: Henkel, Breuer & Partner

(57) **Abstract**

An object is to facilitate screw tightening work for fastening a filter support for an indoor unit, which supports a filter, to a housing, and reduce labor for ensuring safety of the housing. A filter rail 11 that is mounted on a back plate 3 along an opening 10 formed on an air suction side at the back plate 3 of the housing 2, and supports a filter installed in the opening 10 includes: a first side plate 13A installed along the back plate 3 of the housing 2; and a second side plate 13B installed so as to face the first plate part 13A, wherein the first and second side plates 13A and 13B support the filter by sandwiching the filter therebetween, and the first side plates 13A is coupled to the back plate 3 by a screw 14 that penetrates the back plate 3 and the first side plates 13A from outside to inside.

## Description

### {Technical Field}

The present invention relates to a filter support for an indoor unit for installing a filter in an opening part on an air suction side, an indoor unit, and an air conditioner.

### {Background Art}

In some indoor units of package air conditioners, a first end of a duct for blowout is connected at an opening on an air blowout side of a housing, and a blowout port installed in a ceiling or the like is provided on a second end of the duct for blowout. In this duct connection type indoor unit, as illustrated in Fig. 6 to Fig. 8, blowout air is sent to a blowout port 34 from the inside of a housing 32 through a duct 33 for blowout connected to an opening 32a, and is blown out to the inside of a room. On the other hand, at an opening 32b on an air suction side of housing 32, a duct 35 for suction is connected to the housing 32 as illustrated in Fig. 6 and Fig. 7, or no duct for suction is connected as illustrated in Fig. 8.

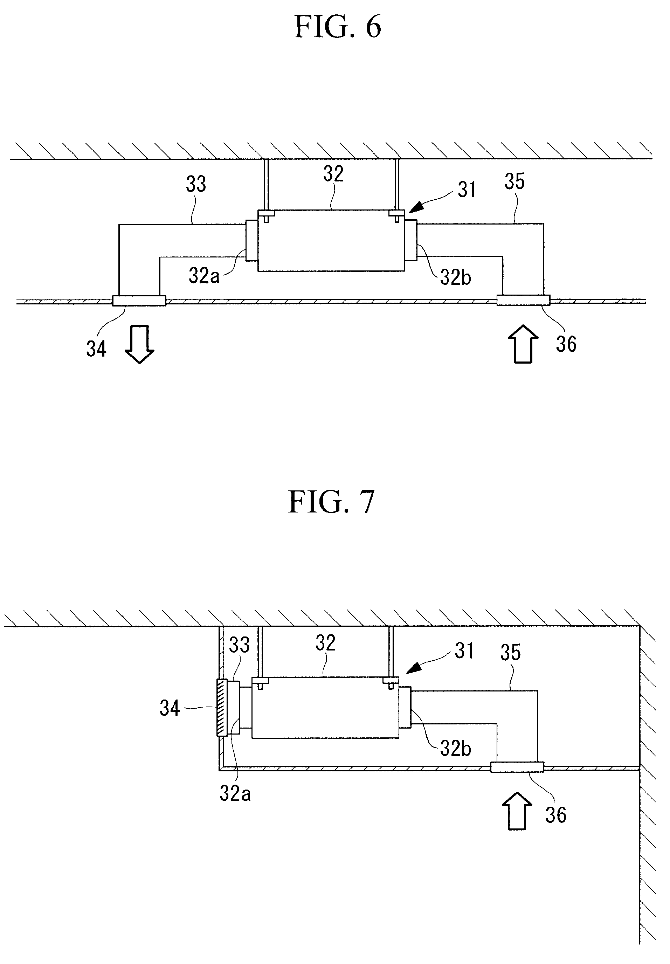

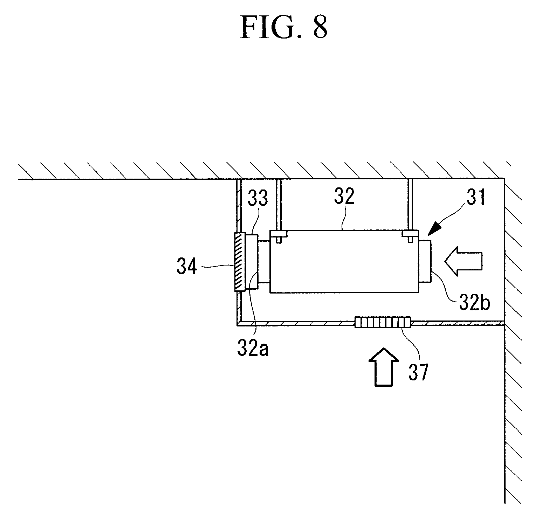

As illustrated in Fig. 6 and Fig. 7, in a case where the first end of the duct 35 for suction is connected to the housing 32, the suction port 36 is connected on the second end of the duct 35 for suction, indoor air suctioned from the suction port 36 is sent to the inside of the housing 32 through the duct 35 for suction. On the other hand, in a case where no duct for suction is connected as illustrated in Fig. 8, the housing 32 directly sucks indoor air which has passed through, for example, a louver. However, a filter is installed in the opening 32b on the air suction side of the housing 32.

PTL 1 described below describes a suspending embedded air conditioner, which has a function of a flange for mounting air suction duct and a function of an air filter rail, and is configured by an air filter rail inner plate and an air filter rail outer plate which are overlapped with each other. A flange part of a filter is slidably inserted into a gap part formed between a bent part of an air filter rail outer plate and a bent part of an air filter rail inner plate, so that the filter is held.

### {Citation List}

### {Patent Literature}

{PTL 1} Japanese Unexamined Utility Model Application, Publication No. Sho62-19525

### {Summary of Invention}

### {Technical Problem}

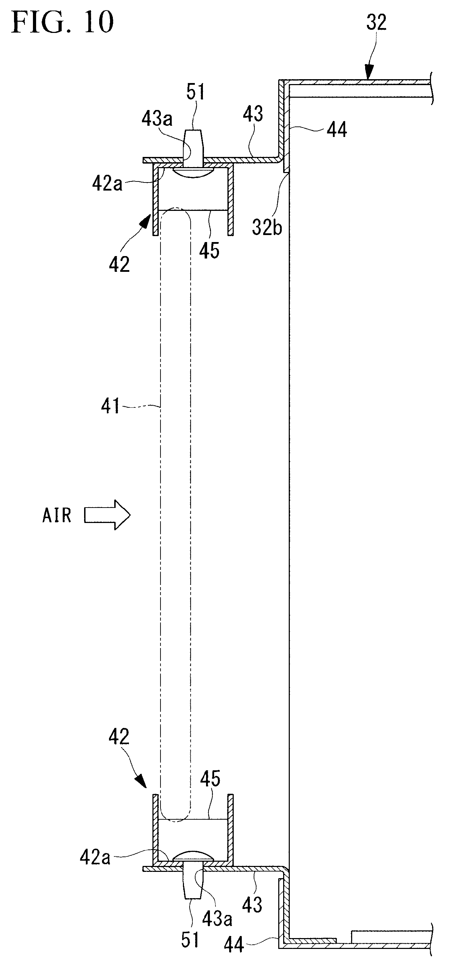

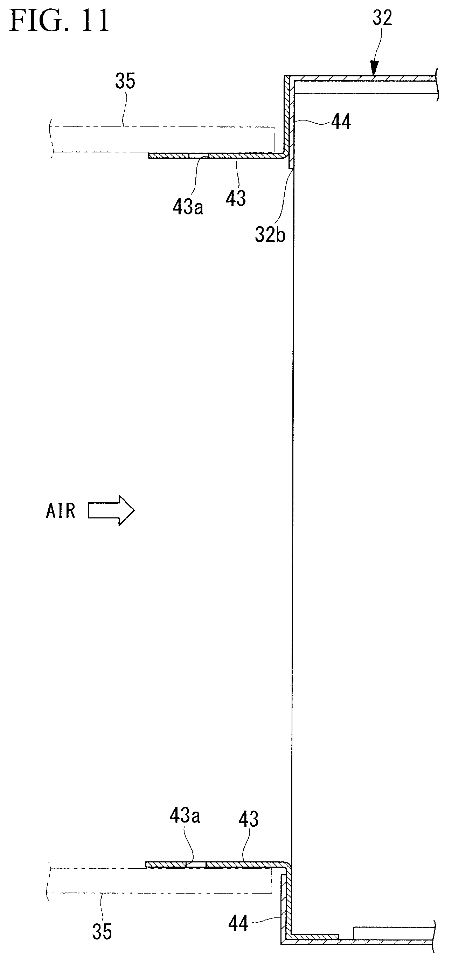

In a product in which connection of the duct 35 for suction on the suction side at an installation place is the standard in shipment, in the above duct connection type indoor unit 31, filter rails 42 for supporting a filter 41, illustrated in Fig. 10, are not sometimes provided in an opening 32b on a suction side. Fig. 11 illustrates a state where the filter rails 42 are not provided in the opening 32b, and the duct 35 for suction is connected to a flanges 43 for duct connection.

In a case where the filter 41 is provided in the opening 32b without connecting the duct for suction at the installation place by using this product, as illustrated in Fig. 10, the filter rails 42 are afterward mounted on the housing 32 in the state illustrated in Fig. 11. In this case, the filter rails 42 are mounted on the flanges 43 for duct connection. The flanges 43 for duct connection each are generally a plate member, and protrude vertically to a back plate 44 of the housing 32, and parallel to a horizontal plane from the housing 32 toward the outside. The filter 41 is supported by the filter rails 42 through buffer members 45 provided at groove parts of the filter rails 42.

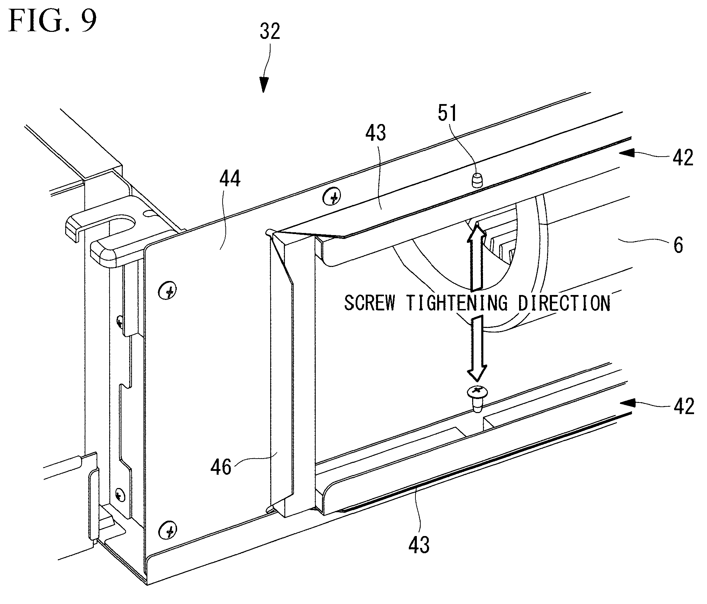

In the filter rails 42, bottom plates 42a of the filter rails 42 are coupled to the flanges 43 for duct connection by screws 51. The screws 51 each are provided to penetrate from the filter rail 42 side to the flange 43 side for duct connection (refer to Fig. 9 and Fig. 10) such that the filter 41 can be installed, and therefore tips of the screws 51 protrude toward the outside of the housing 32. Therefore, when the filter rails 42 are mounted at a factory and shipped, measures such as covering of the tips of the screws 51 separately need to be taken such that a worker is not injured by the screws 51 during transportation. Particularly, inconvenience is caused in a case of a product in which providing of the filter 41 in the opening 32b without connecting the duct for suction at the installation place is the standard in shipment.

The filter rails 42 support the filter 41 by sandwiching the upper and lower ends of the filter 41 therebetween, and therefore are provided parallel to the upper side and the lower side of the housing 32. However, a direction in which each screw 51 is tightened is directed to outside from a facing surface side of the flange 43 for duct connection, and therefore there is a problem that a tool for tightening the screws 51 cannot enter depending on the height of the filter 41. Alternatively, there is a problem that it is difficult to perform screw tightening work.

The present invention has been made in view of the above circumstances, and an object of the invention is to provide a filter support for an indoor unit, an indoor unit, and an air conditioner, which are capable of facilitating screw tightening work for fastening the filter support for an indoor unit, which supports a filter, to a housing, and reducing labor for ensuring safety of the housing.

### {Solution to Problem}

A filter support for an indoor unit according to a first aspect of the present invention is mounted on an outer plate of a housing of an indoor unit along an opening part formed on an air suction side at the outer plate of the housing, the filter support for an indoor unit supporting a filter installed in the opening part, including: a first plate part installed along the outer plate of the housing; and a second plate part installed so as to face the first plate part, wherein the first plate part and the second plate part support the filter by sandwiching the filter therebetween, and the first plate part is coupled to the outer plate by a first screw that penetrates the outer plate and the first plate part from outside to inside.

According to this configuration, when the filter support for an indoor unit that supports the filter is mounted on the outer plate of the housing along the opening part on the air suction side, and the filter is mounted on the filter support for an indoor unit, the filter is installed in the opening part. The filter removes dust contained in air that passes through the opening part. The filter support for an indoor unit has the first plate part and the second plate part, and the first plate part and the second plate part are installed, for example, substantially parallel to the outer plate along the outer plate of the housing, and support the filter by sandwiching the filter therebetween. The first plate part is coupled to the outer plate by the first screw. The first screw penetrates the outer plate and the first plate part from the outside toward the inside, and therefore a tip of the first screw is located at the inside with respect to the outer plate of the housing. Therefore, the filter support for an indoor unit is mounted, so that safety is improved compared with a case where the tip of the screw is located at the outside of the housing.

In the first aspect, the second plate part is formed with a cutout part corresponding to a coupling position of the first screw.

According to this configuration, when the first screw is made to penetrate the outer plate and the first plate part from the outside toward the inside, the second plate part does not interfere with the first screw or a tool, and therefore screw tightening work is facilitated.

In the first aspect, the filter support for an indoor unit further includes a third plate part installed in a direction intersecting with the outer plate.

According to this configuration, the third plate part is installed in the direction intersecting with the outer plate of the housing, for example, installed perpendicular to the outer plate, and therefore the filter support for an indoor unit can be used for duct connection.

In the first aspect, the first plate part is formed with a first screw hole for allowing the first screw to penetrate, and the third plate part is formed with a second screw hole for allowing a second screw to penetrate, the second screw coupling a flange part provided in the direction intersecting with the outer plate, and the third plate part.

According to this configuration, in a case where the housing does not have a flange part provided perpendicular to the outer plate, the filter support for an indoor unit is coupled to the outer plate by the first screw that penetrates the first screw hole formed in the first plate part. In a case where the housing has the flange part provided perpendicular to the outer plate, the filter support for an indoor unit is coupled to the flange part by the second screw that penetrates the second screw hole formed in the third plate part. Therefore, the filter support for an indoor unit can be installed in both the indoor unit of the housing having no flange part, and the indoor unit of the housing having the flange part.

An indoor unit according to a second aspect of the present invention includes the filter support for an indoor unit according to the above first aspect.

An air conditioner according to a third aspect of the present invention includes: the indoor unit according to the above second aspect; and an outdoor unit connected to the indoor unit by a refrigerant pipe.

### {Advantageous Effects of Invention}

According to the present invention, it is possible to facilitate screw tightening work for fastening a filter support for an indoor unit, which supports a filter, to a housing, and to reduce labor for ensuring safety of the housing.

### {Brief Description of Drawings}

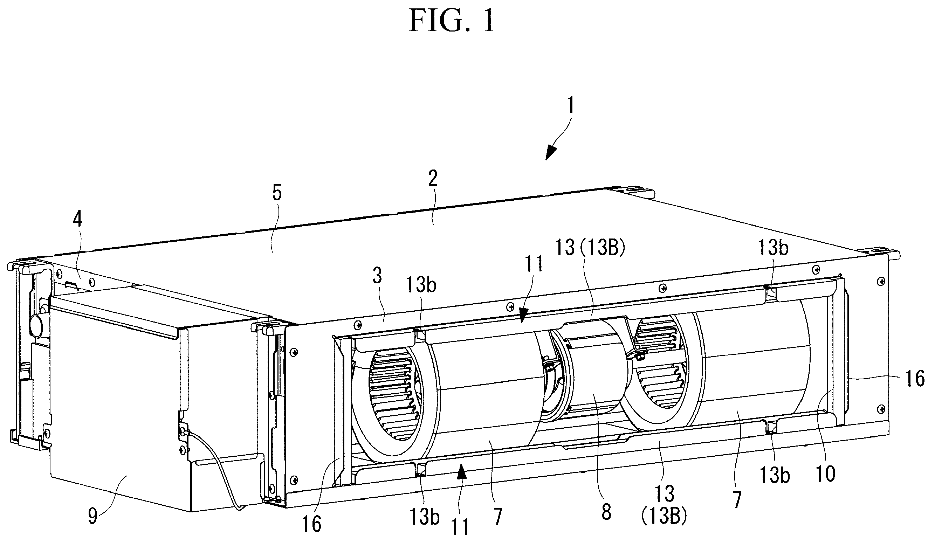

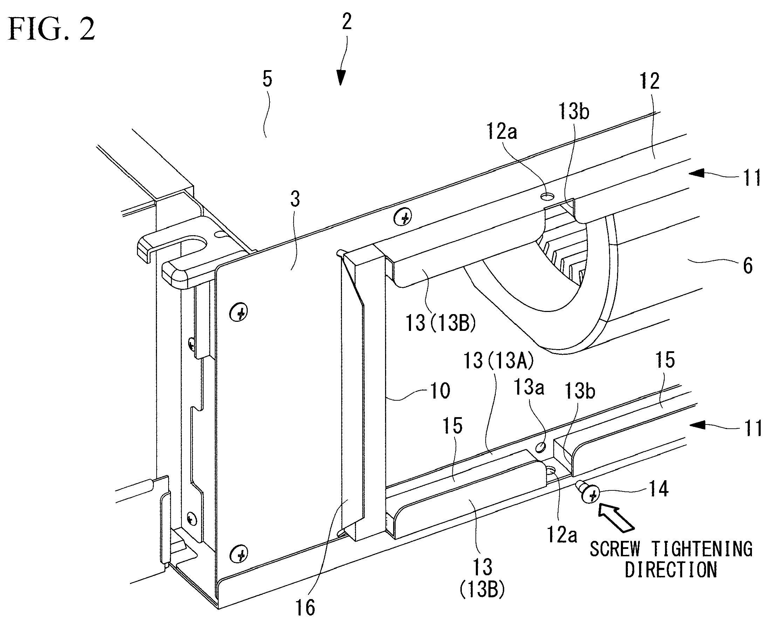

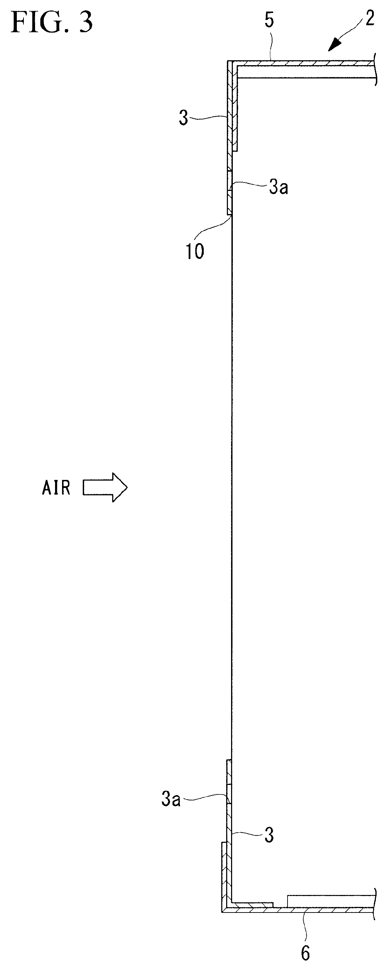

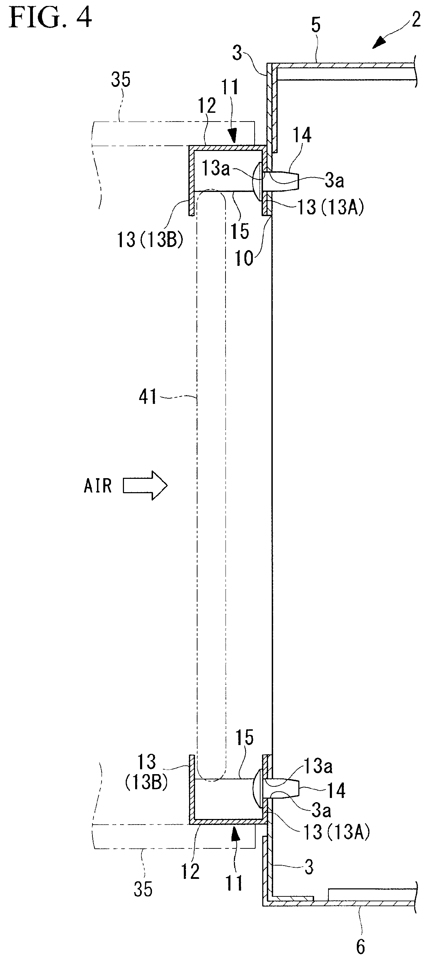

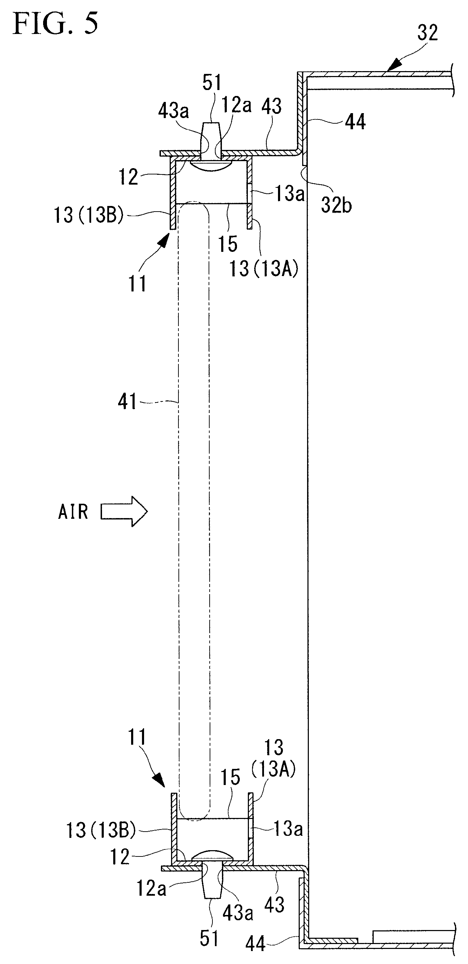

{Fig. 1} Fig. 1 is a perspective view illustrating an indoor unit according to an embodiment of the present invention.
{Fig. 2} Fig. 2 is a partially enlarged perspective view illustrating the indoor unit of the embodiment of the present invention.
{Fig. 3} Fig. 3 is a longitudinal sectional view illustrating an air suction side of the indoor unit of the embodiment of the present invention, and illustrates a state before filter rails are mounted.
{Fig. 4} Fig. 4 is a longitudinal sectional view illustrating the air suction side of the indoor unit of the embodiment of the present invention, and illustrates a state after the filter rails are mounted.
{Fig. 5} Fig. 5 is a longitudinal sectional view illustrating an air suction side of a conventional indoor unit, and illustrates a state after the filter rails according to this embodiment are mounted.
{Fig. 6} Fig. 6 is a longitudinal sectional view illustrating an installation state of the indoor unit of an air conditioner.
{Fig. 7} Fig. 7 is a longitudinal sectional view illustrating the installation state of the indoor unit of the air conditioner.
{Fig. 8} Fig. 8 is a longitudinal sectional view illustrating the installation state of the indoor unit of the air conditioner.
{Fig. 9} Fig. 9 is a partially enlarged perspective view illustrating the conventional indoor unit.
{Fig. 10} Fig. 10 is a longitudinal sectional view illustrating an air suction side of a conventional indoor unit, and illustrates a state after filter rails are mounted.
{Fig. 11} Fig. 11 is a longitudinal sectional view illustrating an air suction side of a conventional indoor unit, and illustrates a state after a duct for suction is mounted.

### {Description of Embodiments}

Hereinafter, an air conditioner according to an embodiment of the present invention will be described with reference to the drawings.

An indoor unit 1 is a duct connection type indoor unit of an air conditioner, for example, a package air conditioner, and a first end of a duct for blowout is connected to an opening on an air blowout side of a housing 2. The indoor unit 1 is hung from a lower surface of a floor of an upstairs of a building or a lower surface of a beam provided blow the lower surface of the floor through a plurality of hanging bolts. In the indoor unit 1, in a case where a ceiling plate is bonded in a room, the whole of the housing 2 is housed in the ceiling. On a second end side of the duct for blowout, a blowout port installed in a ceiling or the like is provided. Illustration and detailed description of an outdoor unit connected to the indoor unit 1 through a refrigerant pipe and an electric wire, and installed outdoors are omitted.

The indoor unit 1 cools or heats air sucked from the inside of the room, by exchanging heat of the air with a refrigerant by use of a heat exchanger. Thereafter, the air, the heat of which has been exchanged, is blown out to the inside of the room.

The indoor unit 1 has, for example, the rectangular parallelepiped housing 2, as illustrated in Fig. 1.

The housing 2 has a front plate (not illustrated) on an air blowout side, a back plate 3 on an air suction side, two side plates 4 each having respective ends connected to the front plate and the back plate 3, a top plate 5 connected to respective upper ends of the front plate, the back plate 3, and the side plates 4, and a bottom plate 6 connected to respective lower ends of the front plate, the back plate 3, and the side plates 4.

Inside the housing 2, the heat exchanger (not illustrated) that exchanges heat of the indoor air with the refrigerant, and a plurality of sets of sirocco fans that circulate the indoor air, a fan motor 8 that drives sirocco fans, a drain pan (not illustrated) that receives drain water generated by heat exchanger, a drain pump (not illustrated) that discharges drain water accumulated inside the drain pan, to the outside and the like, as illustrated in Fig. 1, are incorporated. Additionally, outside the housing 2, a control box 9 that controls operation of the indoor unit 1 is provided on the side plate 4, for example.

In housing 2, an opening for blowout (not illustrated) is formed in the front plate on the air blowout side. To the opening for blowout, the first end of the duct for blowout (not illustrated) is connected. On the second end side of the duct for blowout, a blowout port installed on the ceiling or the like is provided.

Furthermore, in the housing 2, an opening 10 is formed in the back plate 3 on the air suction side. There are a case where a duct 35 for suction is connected to the opening 10, and a case where the duct 35 for suction is not connected to the opening 10. In Fig. 4, for convenience, both the duct 35 for suction and a filter 41 are illustrated by two-dot chain lines. However, only one of the duct 35 for suction and the filter 41 is actually installed.

In a case where the first end of the duct 35 for suction is connected to the housing 2, a suction port on the second end side of the duct 35 for suction is connected, and indoor air sucked from the suction port is sent into the housing 2 through the duct 35 for suction. On the other hand, in a case where the duct 35 for suction is not connected, the housing 2 directly sucks air that has passed through a louver or the like, but the filter 41 is installed in the opening 10 of the housing 2. The area of the filter 41 is substantially the same as the area of the opening 10, and dust contained in the air that passes through the opening 10 is removed. The thickness of the filter 41 is, for example, 5 mm.

The opening 10 which is formed in, for example, a rectangle is formed in the back plate 3 of the housing 2, and filter rails 11 are mounted on the back plate 3 along the opening 10. The filter rails 11 are provided in parallel on an upper side and a lower side of the back plate 3 with the opening 10 sandwiched therebetween. Consequently, the filter 41 is supported in a state where the upper and lower ends are sandwiched by the filter rails 11, as illustrated in Fig. 4.

Each of the filter rails 11 has a section formed in a U-shape, and is a long member in one direction. Each filter rail 11 is configured by a bottom plate 12, two side plates 13 (a first side plate 13A and a second side plate 13B) facing each other, and the like. The side plates 13 are connected to the bottom plate 12 at the both ends of the bottom plate 12, and face each other.

When the filter rails 11 are installed on the back plate 3 of the housing 2, the first side plates 13A are fastened to the back plate 3 by screws 14. The first side plates 13A are formed with screw holes 13a. Additionally, in the back plate 3, screw holes 3a for mounting the filter rails 11 are formed at such positions as to opposite to the screw holes 13a of the first side plates 13A. Each screw hole 3a is formed in a direction intersecting with a plate surface of the back plate 3, for example, in the vertical direction.

The second side plates 13B are parallel to the first side plates 13A, and are formed with cutouts 13b at such positions as to correspond to the screw holes 13a formed in the first side plates 13A, as illustrated in Fig. 2. Consequently, it is possible to allow the screws 14 to pass through the screw holes 3a and the screw holes 13a, and tighten the screws 14 by a tool. Additionally, inconvenience that in screw tightening work, the tool cannot enter, or it is difficult to perform the work is not caused.

The screw holes 13a are formed in the first side plates 13A, so that in the housing 2 of the indoor unit 1, the back plate 3 mounted with the filter rails 11 may not be provided with conventional flanges 43 for duct connection (refer to Fig. 9 to Fig. 11). Therefore, a section of the back plate 3 is not formed in an L-shape, but formed in a flat plate-like shape with no protruding part on the outside, in the vicinity of an edge of the opening 10, as illustrated in Fig. 2 and Fig. 3. Then, a direction in which each of the screws 14 is tightened is directed to the inside of the housing 2 from the outer surface side of the housing 2, and therefore tips of the screws 14 do not protrude toward the outer surface of the housing 2. Accordingly, it is not necessary to separately take measures such that a worker is not injured by the screws 14 during transportation, and it is possible to reduce labor for ensuring safety. Particularly, in a case of a product in which providing of the filter 41 in the opening 10 at an installation place without connecting the duct 35 for suction is the standard in shipment, even when the filter rails 11 are mounted at a factory, safety is ensured, and therefore a higher effect is obtained.

When the filter rails 11 are installed in the back plate 3 of the housing 2, the bottom plates 12 of the filter rails 11 are perpendicular to the back plate 3 of the housing 2, and are parallel to the horizontal plane. Therefore, the bottom plates 12 of the filter rails 11 can be used for connection of the duct 35 for suction as illustrated in Fig. 4, similarly to the conventional flanges 43 for duct connection. Accordingly, the indoor unit 1 mounted with the filter rails 11 according to this embodiment can correspond both the case where the duct 35 for suction is connected to the housing 2, and the case where the duct 35 for suction is not connected to the housing.

In the bottom plates 12 of the filter rails 11, screw holes 12a may be formed in addition to the screw holes 13a of the first side plate 13A, as illustrated in Fig. 5. Consequently, as illustrated in Fig. 5, the filter rails 11 according to this embodiment can be mounted on the conventional flanges 43 for duct connection. The flanges 43 for duct connection are formed with screw holes 43a at such positions as to correspond to the screw holes 12a. Therefore, filter rails do not need to be separately prepared for the conventional indoor unit 31 in which the flanges 43 for duct connection are mounted on a back plate 44 of the housing 32, and it is possible to share the component.

Additionally, a difference between the conventional back plate 44 formed with the flanges 43 for duct connection, and the back plate 3 according to this embodiment, which is not formed with the flange for duct connection is whether or not bent portions for flanges for duct connection exist. Therefore, in each of the manufacturing processes of the indoor units 1 and 31, the back plate 3 or 44 of the housing 2 or 32 is simply changed, or the shape of the opening 10 or 32b on the air suction side of the back plate 3 or 44 or necessity of bending work is simply changed, so that it is possible to manufacture both the indoor unit 1, 31. Accordingly, it is possible to flexibly cope with change in the numbers of manufacturing of the indoor units 1 and 31 due to increase or reduction of order.

Inside the filter rails 11, buffer members 15 whose quality of materials is foamed rubber or the like are provided. The filter 41 is supported by the filter rails 11 through the buffer members 15. Consequently, it is possible to reduce vibration transmitted from the housing 2 to the filter 41.

A distance between a lowermost end of the filter rail 11 installed on the upper side of the housing 2 and an uppermost end of the filter rail 11 installed on the lower side is slightly shorter than the height of the filter 41. In a case where the filter 41 is installed in the filter rails 11, in a state where the filter 41 is bent in a height direction to form a V-shaped section, and the height is made to be lower than an interval between both the filter rails 11, the filter 41 is inserted between both the filter rails 11. Then, the filter 41 bent in the V-shape is released to be formed in a straight shape, and the upper and lower ends of the filter 41 are fitted in respective groove parts of the filter rails 11.

Now, a method for mounting the filter rails 11 on the housing 2, and a method for installing the filter 41 or the duct 35 for suction will be described.

First, a case where the filter rails 11 are mounted on the back plate 3 according to this embodiment, which are not formed with the flanges for duct connection in the state of Fig. 3 will be described. In this case, screw holes 3a formed in the flat plate-like back plate 3, and the screw holes 13a formed in the first side plates 13A of the filter rails 11 are made to coincide with each other. Then, each screw 14 is inserted into both the screw holes 3a and 13a to be tightened. Consequently, the filter rails 11 are mounted on the back plate 3. This work is performed for both the filter rail 11 on the upper side of the back plate 3 and the filter rail 11 on the lower side.

Thereafter, in a case where the filter 41 is mounted, the filter 41 is inserted between both the filter rails 11 while being bent, and the upper and lower ends of the filter 41 are fitted in the respective groove parts. On the other hand, in a case where the duct 35 for suction is connected, the bottom plates 12 of the filter rails 11, and the vertically installed flanges 16 for duct connection (refer to Fig. 1) are utilized. For example, an inner surface of the duct 35 for suction is brought into contact with outer surfaces of the bottom plates 12 of the filter rails 11, and outer surfaces of the flanges 16 for duct connection, the duct 35 for suction is connected to the filter rails 11 and the flanges 16 for duct connection from the outside of the duct 35 for suction by using a band or a tapping screw. Consequently, the duct 35 for suction is fastened to the housing 2.

Now, a case where the filter rails 11 are mounted on the conventional back plate 44 formed with the flanges 43 for duct connection will be described with reference to Fig. 5. In this case, the screw holes 43a formed in the flanges 43 for duct connection, screw holes 12a formed in the bottom plates 12 of the filter rails 11 are made to coincide with each other. Then, each screw 51 is inserted into both the screw holes 43a and 12a to be tightened. Consequently, the filter rails 11 are mounted on the flanges 43 for duct connection. This work is performed for both the filter rail 11 on the upper side and the filter rail 11 on the lower side.

Thereafter, in a case where the filter 41 is mounted, the filter 41 is inserted while being bent between both the filter rails 11, and the upper and lower ends of the filter 41 are fitted in the respective groove parts, in a similar manner to the above case according to this embodiment. On the other hand, in a case where the duct 35 for suction is connected, the filter rails 11 according to this embodiment are not mounted on the flanges 43 for duct connection, as illustrated in Fig. 11. In this case, horizontally installed flanges 43 for duct connection, and vertically installed flanges 46 for duct connection (refer to Fig. 9) are utilized. For example, the inner surface of the duct 35 for suction is brought into contact with outer surfaces of the flanges 43 and 46 for duct connection, and the duct 35 for suction is connected to the flanges 43 and 46 for duct connection from the outside of the duct 35 for suction by using a band or a tapping screw.

As described above, according to this embodiment, as illustrated in Fig. 4, a direction in which each of the screws of the filter rails 11 is tightened is directed to the inside of the housing 2, and therefore the tips of the screws 14 do not protrude to the outer surface of the housing 2. Accordingly, it is not necessary to separately take measures such that a worker is not injured by the screws 14 during transportation, and it is possible to reduce labor for ensuring safety.

Additionally, the bottom plates 12 of the filter rails 11 according to this embodiment can be used for the connection of the duct 35 for suction, similarly to the conventional flanges 43 for duct connection. Accordingly, the indoor unit 1 mounted with the filter rails 11 according to this embodiment can correspond to both the case where the duct 35 for suction is connected to the housing 2, and the case where the duct 35 for suction is not connected to the housing 2.

Furthermore, in the bottom plates 12 of the filter rails 11 according to this embodiment, in a case where the screw holes 12a are formed in addition to the screw holes 13a of the first side plates 13A, the filter rails 11 according to this embodiment can be mounted also on the conventional indoor unit 31 in which the flanges 43 for duct connection are mounted on the back plate 44 of the housing 32. Accordingly, it is possible to share the components, and a plurality of types of filter rails do not need to be prepared corresponding to a plurality of types of indoor units (for example, the above indoor unit 1 and indoor unit 31).

Moreover, a difference between the conventional back plate 44 formed with the flanges 43 for duct connection, and the back plate 3 according to this embodiment, which is not formed with the flange for duct connection is whether or not the bent portions for flanges for duct connection exist. Therefore, it is possible to flexibly cope with change in the numbers of manufacturing of the indoor units due to increase or reduction of order.

### {Reference Signs List}

- 1, 31: indoor unit
- 2, 32: housing
- 3: back plate (outer plate)
- 3a, 43a: screw hole
- 4: side plate
- 5: top plate
- 6: bottom plate
- 7: sirocco fan
- 8: fan motor
- 9: control box
- 10: opening (opening part)
- 11: filter rail (filter support for an indoor unit)
- 12: bottom plate (third plate part)
- 12a: screw hole (second screw hole)
- 13: side plate
- 13A: first side plate (first plate part)
- 13B: second side plate (second plate part)
- 13a: screw hole (first screw hole)
- 13b: cutout
- 14: screw (first screw)
- 15, 45: buffer member
- 16, 46: flange for duct connection
- 32a, 32b: opening
- 33: duct for blowout
- 34: blowout port
- 35: duct for suction
- 36: suction port
- 37: louver
- 41: filter
- 42: filter rail
- 42a: bottom plate
- 43: flange for duct connection (flange part)
- 44: back plate
- 51: screw (second screw)

## Claims

1. A filter support for an indoor unit mounted on an outer plate of a housing of an indoor unit along an opening part formed on an air suction side at the outer plate of the housing, the filter support for an indoor unit supporting a filter installed in the opening part, comprising:
a first plate part installed along the outer plate of the housing; and
a second plate part installed so as to face the first plate part, wherein
the first plate part and the second plate part support the filter by sandwiching the filter therebetween, and
the first plate part is coupled to the outer plate by a first screw that penetrates the outer plate and the first plate part from outside to inside.

2. The filter support for an indoor unit according to claim 1, wherein the second plate part is formed with a cutout part corresponding to a coupling position of the first screw.

3. The filter support for an indoor unit according to claim 1 or 2, further comprising a third plate part installed in a direction intersecting with the outer plate.

4. The filter support for an indoor unit according to claim 3, wherein
the first plate part is formed with a first screw hole for allowing the first screw to penetrate, and
the third plate part is formed with a second screw hole for allowing a second screw to penetrate, the second screw coupling a flange part provided in the direction intersecting with the outer plate, and the third plate part.

5. An indoor unit comprising the filter support for an indoor unit according to any one of claims 1 to 4.

6. An air conditioner comprising:
the indoor unit according to claim 5; and
an outdoor unit connected to the indoor unit by a refrigerant pipe.
